# EUROPEAN PATENT APPLICATION

(11) **EP 4 138 401 A1**
(43) Date of publication of application: **22.02.2023**
(21) Application number: 22189385.2
(22) Date of filing: 09.08.2022
(51) Int. Cl.: H04N 21/845, H04N 21/6437, H04N 21/81, H04L 65/60, H04L 65/65, H04N 19/70, H04N 21/2343, H04N 21/4402, H04N 21/6547, H04N 21/235, H04N 19/82

(54) **A METHOD, AN APPARATUS AND A COMPUTER PROGRAM PRODUCT FOR VIDEO ENCODING AND VIDEO DECODING**

(30) Priority: 17.08.2021 FI 20215867
(71) Applicant: Nokia Technologies Oy, 02610 Espoo (FI)
(72) Inventor: KAMMACHI SREEDHAR, Kashyap, 33250 Tampere (FI); MATE, Sujeet Shyamsundar, 33720 Tampere (FI); HANNUKSELA, Miska Matias, 33610 Tampere (FI); AKSU, Emre Baris, 33800 Tampere (FI)
(74) Representative: Nokia EPO representatives

(57) **Abstract**

The embodiments relate to a method at a sender device, the method comprising receiving, as a response to a delivered indication of a number of supported subpictures, from a receiver an indication on a number of subpictures allowed in an encoded image data; partitioning a bitstream representing an image data into subpictures, the amount of which corresponds to the indicated number of subpictures; generating an encoded bitstream comprising said subpictures; delivering the encoded bitstream to a receiver apparatus; and delivering required parameter sets for said subpictures to said receiver apparatus. The embodiments also concern a method at a receiver device, and corresponding devices.

## Description

### Technical Field

The present solution generally relates to video encoding and video decoding.

### Background

This section is intended to provide a background or context to the invention that is recited in the claims. The description herein may include concepts that could be pursued but are not necessarily ones that have been previously conceived or pursued. Therefore, unless otherwise indicated herein, what is described in this section is not prior art to the description and claims in this application and is not admitted to be prior art by inclusion in this section.

A video coding system may comprise an encoder that transforms an input video into a compressed representation suited for storage/transmission and a decoder that can uncompress the compressed video representation back into a viewable form. The encoder may discard some information in the original video sequence in order to represent the video in a more compact form, for example, to enable the storage/transmission of the video information at a lower bitrate than otherwise might be needed.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided a sender apparatus comprising means for receiving, as a response to a delivered indication of a number of supported subpictures, an indication on a number of subpictures allowed in an encoded image data; means for partitioning a bitstream representing an image data into subpictures, the amount of which corresponds to the indicated number of subpictures; means for generating an encoded bitstream comprising said subpictures; means for delivering the encoded bitstream to a receiver apparatus; and means for delivering required parameter sets for said subpictures to said receiver apparatus.

According to a second aspect, there is provided a receiver apparatus comprising means for receiving an encoded bitstream comprising more than one subpictures; means for receiving required parameter sets for said subpictures; means for converting the encoded bitstream into bitstreams corresponding to said more than one subpictures; means for decoding said more than one subpictures at corresponding decoding instances to result in more than one individual pictures; and means for rendering the more than one individual pictures as a single picture.

According to a third aspect, there is provided a method, comprising receiving, as a response to a delivered indication of a number of supported subpictures, from a receiver an indication on a number of subpictures allowed in an encoded image data; partitioning a bitstream representing an image data into subpictures, the amount of which corresponds to the indicated number of subpictures; generating an encoded bitstream comprising said subpictures; delivering the encoded bitstream to a receiver apparatus; and delivering required parameter sets for said subpictures to said receiver apparatus.

According to a fourth aspect, there is provided a method comprising receiving an encoded bitstream comprising more than one subpictures; receiving required parameter sets for said subpictures; converting the encoded bitstream into bitstreams corresponding to said more than one subpictures; decoding said more than one subpictures at corresponding decoding instances to result in more than one individual pictures; and rendering the more than one individual pictures as a single picture.

According to a fifth aspect, there is provided an apparatus comprising at least one processor, memory including computer program code, the memory and the computer program code configured to, with the at least one processor, cause the apparatus to receive, as a response to a delivered indication of a number of supported subpictures, from a receiver an indication on a number of subpictures allowed in an encoded image data; to partition a bitstream representing an image data into subpictures, the amount of which corresponds to the indicated number of subpictures; to generate an encoded bitstream comprising said subpictures; to deliver the encoded bitstream to a receiver apparatus; and to deliver required parameter sets for said subpictures to said receiver apparatus.

According to a sixth aspect, there is provided an apparatus comprising at least one processor, memory including computer program code, the memory and the computer program code configured to, with the at least one processor, cause the apparatus to receive an encoded bitstream comprising more than one subpictures; to receive required parameter sets for said subpictures; to convert the encoded bitstream into bitstreams corresponding to said more than one subpictures; to decode said more than one subpictures at corresponding decoding instances to result in more than one individual pictures; and to render the more than one individual pictures as a single picture.

According to a seventh aspect, there is provided a computer program product comprising computer program code configured to, when executed on at least one processor, cause an apparatus or a system to: receive, as a response to a delivered indication of a number of supported subpictures, from a receiver an indication on a number of subpictures allowed in an encoded image data; partition a bitstream representing an image data into subpictures, the amount of which corresponds to the indicated number of subpictures; generate an encoded bitstream comprising said subpictures; deliver the encoded bitstream to a receiver apparatus; and deliver required parameter sets for said subpictures to said receiver apparatus.

According to an eighth aspect, there is provided a computer program product comprising computer program code configured to, when executed on at least one processor, cause an apparatus or a system to: receive an encoded bitstream comprising more than one subpictures; receive required parameter sets for said subpictures; convert the encoded bitstream into bitstreams corresponding to said more than one subpictures; decode said more than one subpictures at corresponding decoding instances to result in more than one individual pictures; and render the more than one individual pictures as a single picture.

According to an embodiment, a number of deliverable subpictures is indicated in an encoded image data.

According to an embodiment, said subpictures are independent and/or dependent subpictures.

According to an embodiment, it is indicated whether the required parameter sets are for independent decoding of independent subpictures.

According to an embodiment, wherein loop filtering is turned on and/or off across subpicture boundaries.

According to an embodiment, the computer program product is embodied on a non-transitory computer readable medium.

### Description of the Drawings

In the following, various embodiments will be described in more detail with reference to the appended drawings, in which
- Fig. 1: shows an example of an encoding method;
- Fig. 2: shows an example of a decoding method;
- Fig. 3a: shows an example of parallel decoding with N=4 decoders and N=4 subpictures;
- Fig. 3b: shows an example of parallel decoding with M=2 decoder and N=4 subpictures;
- Fig. 3c: shows an example of parallel decoding with 1 decoder and N=4 subpictures (single decoder instance);
- Fig. 4: is a flowchart illustrating a method according to an embodiment;
- Fig. 5: is a flowchart illustrating a method according to another embodiment; and

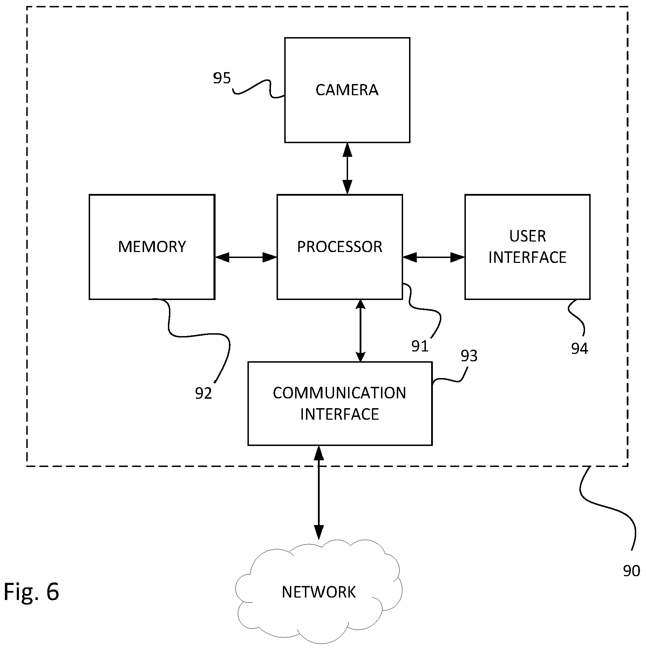

- Fig. 6: shows an apparatus according to an embodiment.

### Description of Example Embodiments

The present embodiments are related to Versatile Video Coding (VVC), and in particular to VVC content creation based on receiver bitstream extraction requirements or decoding capabilities. However, the present embodiments are not limited to VVC but may be applied with any video coding scheme or format that provides a picture partitioning mechanism similar to subpictures of VVC.

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment is included in at least one embodiment of the disclosure.

The Advanced Video Coding standard (which may be abbreviated AVC or H.264/AVC) was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organization for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, each integrating new extensions or features to the specification. These extensions include Scalable Video Coding (SVC) and Multiview Video Coding (MVC).

The High Efficiency Video Coding standard (which may be abbreviated HEVC or H.265/HEVC) was developed by the Joint Collaborative Team - Video Coding (JCT-VC) of VCEG and MPEG. The standard is published by both parent standardization organizations, and it is referred to as ITU-T Recommendation H.265 and ISO/IEC International Standard 23008-2, also known as MPEG-H Part 2 High Efficiency Video Coding (HEVC). Extensions to H.265/HEVC include scalable, multiview, three-dimensional, and fidelity range extensions, which may be referred to as SHVC, MV-HEVC, 3D-HEVC, and REXT, respectively.

The Versatile Video Coding standard (which may be abbreviated VVC, H.266, or H.266/WC) was developed by the Joint Video Experts Team (JVET), which is a collaboration between the ISO/IEC MPEG and ITU-T VCEG. Extensions to VVC are presently under development.

Some key definitions, bitstream and coding structures are described in this section as an example of a video encoder, decoder, encoding method, decoding method, and a bitstream structure, wherein the embodiments may be implemented.

Video codec may comprise an encoder that transforms the input video into a compressed representation suited for storage/transmission and a decoder that can uncompress the compressed video representation back into a viewable form. The compressed representation may be referred to as a bitstream or a video bitstream. A video encoder and/or a video decoder may also be separate from each other, i.e., they need not to form a codec. The encoder may discard some information in the original video sequence in order to represent the video in a more compact form (that is, at lower bitrate).

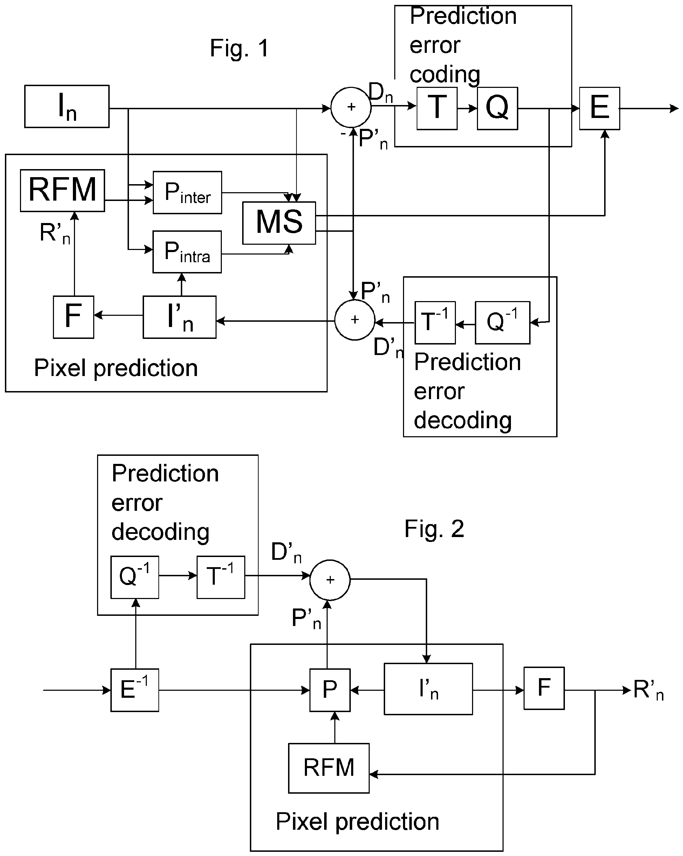

An example of an encoding process is illustrated in Figure 1. Figure 1 illustrates an image to be encoded (Iₙ); a predicted representation of an image block (P'ₙ); a prediction error signal (Dₙ); a reconstructed prediction error signal (D'ₙ); a preliminary reconstructed image (I'ₙ); a final reconstructed image (R'ₙ); a transform (T) and inverse transform (T⁻¹); a quantization (Q) and inverse quantization (Q⁻¹); entropy encoding (E); a reference frame memory (RFM); inter prediction (Pinter); intra prediction (Pintra); mode selection (MS) and filtering (F). An example of a decoding process is illustrated in Figure 2. Figure 2 illustrates a predicted representation of an image block (P'ₙ); a reconstructed prediction error signal (D'ₙ); a preliminary reconstructed image (I'ₙ); a final reconstructed image (R'ₙ); an inverse transform (T⁻¹); an inverse quantization (Q⁻¹); an entropy decoding (E⁻¹); a reference frame memory (RFM); a prediction (either inter or intra) (P); and filtering (F).

Hybrid video codecs, for example ITU-T H.263, H.264/AVC and HEVC, may encode the video information in two phases. At first, pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). In the first phase, predictive coding may be applied, for example, as so-called sample prediction and/or so-called syntax prediction.

In the sample prediction, pixel or sample values in a certain picture area or "block" are predicted. These pixel or sample values can be predicted, for example, using one or more of motion compensation or intra prediction mechanisms.

Motion compensation mechanisms (which may also be referred to as inter prediction, temporal prediction or motion-compensated temporal prediction or motion-compensated prediction or MCP) involve finding and indicating an area in one of the previously encoded video frames that corresponds closely to the block being coded. One of the benefits of the inter prediction is that they may reduce temporal redundancy.

In intra prediction, pixel or sample values can be predicted by spatial mechanisms. Intra prediction involves finding and indicating a spatial region relationship, and it utilizes the fact that adjacent pixels within the same picture are likely to be correlated. Intra prediction can be performed in spatial or transform domain, i.e., either sample values or transform coefficients can be predicted. Intra prediction may be exploited in intra coding, where no inter prediction is applied.

In the syntax prediction, which may also be referred to as parameter prediction, syntax elements and/or syntax element values and/or variables derived from syntax elements are predicted from syntax elements (de)coded earlier and/or variables derived earlier. Non-limiting examples of syntax prediction are provided below.

In motion vector prediction, motion vectors e.g., for inter and/or inter-view prediction may be coded differentially with respect to a block-specific predicted motion vector. In many video codecs, the predicted motion vectors are created in a predefined way, for example by calculating the median of the encoded or decoded motion vectors of the adjacent blocks. Another way to create motion vector predictions, sometimes referred to as advanced motion vector prediction (AMVP), is to generate a list of candidate predictions from adjacent blocks and/or co-located blocks in temporal reference pictures and signalling the chosen candidate as the motion vector predictor. In addition to predicting the motion vector values, the reference index of previously coded/decoded picture can be predicted. The reference index is typically predicted from adjacent blocks and/or co-located blocks in temporal reference picture. Differential coding of motion vectors is typically disabled across slice boundaries.

The block partitioning, e.g., from coding tree units (CTUs) to coding units (CUs) and down to prediction units (PUs), may be predicted. Partitioning is a process a set is divided into subsets such that each element of the set may be in one of the subsets. Pictures may be partitioned into CTUs with a maximum size of 128x128, although encoders may choose to use a smaller size, such as 64x64. A coding tree unit (CTU) may be first partitioned by a quaternary tree (a.k.a. quadtree) structure. Then the quaternary tree leaf nodes can be further partitioned by a multi-type tree structure. There are four splitting types in multi-type tree structure, vertical binary splitting, horizontal binary splitting, vertical ternary splitting, and horizontal ternary splitting. The multi-type tree leaf nodes are called coding units (CUs). CU, PU and TU (transform unit) have the same block size, unless the CU is too large for the maximum transform length. A segmentation structure for a CTU is a quadtree with nested multi-type tree using binary and ternary splits, i.e., no separate CU, PU and TU concepts are in use except when needed for CUs that have a size too large for the maximum transform length. A CU can have either a square or rectangular shape.

In filter parameter prediction, the filtering parameters e.g., for sample adaptive offset may be predicted.

Prediction approaches using image information from a previously coded image can also be called as inter prediction methods which may also be referred to as temporal prediction and motion compensation. Prediction approaches using image information within the same image can also be called as intra prediction methods.

Secondly, the prediction error, i.e., the difference between the predicted block of pixels and the original block of pixels, is coded. This may be done by transforming the difference in pixel values using a specified transform (e.g., Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size of transmission bitrate).

In many video codecs, including H.264/AVC and HEVC, motion information is indicated by motion vectors associated with each motion compensated image block. Each of these motion vectors represents the displacement of the image block in the picture to be coded (in the encoder) or decoded (at the decoder) and the prediction source block in one of the previously coded or decoded images (or pictures). H.264/AVC and HEVC, as many other video compression standards, a picture is divided into a mesh of rectangles, for each of which a similar block in one of the reference pictures is indicated for inter prediction. The location of the prediction block is coded as a motion vector that indicates the position of the prediction block relative to the block being coded.

Video coding standards may specify the bitstream syntax and semantics as well as the decoding process for error-free bitstreams, whereas the encoding process might not be specified, but encoders may just be required to generate conforming bitstreams. Bitstream and decoder conformance can be verified with the Hypothetical Reference Decoder (HRD). The standards may contain coding tools that help in coping with transmission errors and losses, but the use of the tools in encoding may be optional and decoding process for erroneous bitstreams might not have been specified.

A syntax element may be defined as an element of data represented in the bitstream. A syntax structure may be defined as zero or more syntax elements present together in the bitstream in a specified order.

An elementary unit for the input to an encoder and the output of a decoder, respectively, in most cases is a picture. A picture given as an input to an encoder may also be referred to as a source picture, and a picture decoded by a decoded may be referred to as a decoded picture or a reconstructed picture.

The source and decoded pictures are each comprised of one or more sample arrays, such as one of the following sets of sample arrays:
- Luma (Y) only (monochrome).
- Luma and two chroma (YCbCr or YCgCo).
- Green, Blue, and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g., in a coded bitstream e.g., using the Video Usability Information (VUI) syntax of HEVC or alike. A component may be defined as an array or single sample from one of the three sample arrays (luma and two chroma) or the array or a single sample of the array that compose a picture in monochrome format.

A picture may be defined to be either a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays.

Some chroma formats may be summarized as follows:
- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

Coding formats or standards may allow to code sample arrays as separate color planes into the bitstream and respectively decode separately coded color planes from the bitstream. When separate color planes are in use, each one of them is separately processed (by the encoder and/or the decoder) as a picture with monochrome sampling.

An elementary unit for the output of encoders of some coding formats, such as HEVC and WC, and the input of decoders of some coding formats, such as HEVC and WC, is a Network Abstraction Layer (NAL) unit. For transport over packet-oriented networks or storage into structured files, NAL units may be encapsulated into packets or similar structures.

NAL units can be categorized into Video Coding Layer (VCL) NAL units and non-VCL NAL units.

VCL NAL units may for example be coded slice NAL units.

The Versatile Video Coding (VVC) includes new coding tools compared to HEVC or H.264/AVC. These coding tools are related to, for example, intra prediction; inter-picture prediction; transform, quantization and coefficients coding; entropy coding; in-loop filter; screen content coding; 360-degree video coding; high-level syntax and parallel processing. Some of these tools are briefly described in the following:
- Intra prediction
   - 67 intra mode with wide angles mode extension
   - Block size and mode dependent 4 tap interpolation filter
   - Position dependent intra prediction combination (PDPC)
   - Cross component linear model intra prediction (CCLM)
   - Multi-reference line intra prediction
   - Intra sub-partitions
   - Weighted intra prediction with matrix multiplication
- Inter-picture prediction
   - Block motion copy with spatial, temporal, history-based, and pairwise average merging candidates
   - Affine motion inter prediction
   - sub-block based temporal motion vector prediction
   - Adaptive motion vector resolution
   - 8x8 block-based motion compression for temporal motion prediction
   - High precision (1/16 pel) motion vector storage and motion compensation with 8-tap interpolation filter for luma component and 4-tap interpolation filter for chroma component
   - Triangular partitions
   - Combined intra and inter prediction
   - Merge with motion vector difference (MVD) (MMVD)
   - Symmetrical MVD coding
   - Bi-directional optical flow
   - Decoder side motion vector refinement
   - Bi-prediction with CU-level weight
- Transform, quantization and coefficients coding
   - Multiple primary transform selection with DCT2, DST7 and DCT8
   - Secondary transform for low frequency zone
   - Sub-block transform for inter predicted residual
   - Dependent quantization with max QP increased from 51 to 63
   - Transform coefficient coding with sign data hiding
   - Transform skip residual coding
- Entropy Coding
   - Arithmetic coding engine with adaptive double windows probability update
- In loop filter
   - In-loop reshaping
   - Deblocking filter with strong longer filter
   - Sample adaptive offset
   - Adaptive Loop Filter
- Screen content coding:
   - Current picture referencing with reference region restriction
- 360-degree video coding
   - Horizontal wrap-around motion compensation
- High-level syntax and parallel processing
   - Reference picture management with direct reference picture list signalling
   - Tile groups with rectangular shape tile groups

In VVC, each picture may be partitioned into coding tree units (CTUs) similar to HEVC. A CTU may be split into smaller CUs using quaternary tree structure. Each CU may be partitioned using quad-tree and nested multi-type tree including ternary and binary split. There are specific rules to infer partitioning in picture boundaries. The redundant split patterns are disallowed in nested multi-type partitioning.

In some video coding schemes, such as HEVC and WC, a picture is divided into one or more tile rows and one or more tile columns. The partitioning of a picture to tiles forms a tile grid that may be characterized by a list of tile column widths and a list of tile row heights. A tile may be required to contain an integer number of elementary coding blocks, such as CTUs in HEVC and WC. Consequently, tile column widths and tile row heights may be expressed in the units of elementary coding blocks, such as CTUs in HEVC and VVC.

A tile may be defined as a sequence of elementary coding blocks, such as CTUs in HEVC and WC, that covers one "cell" in the tile grid, i.e., a rectangular region of a picture. Elementary coding blocks, such as CTUs, may be ordered in the bitstream in raster scan order within a tile.

Some video coding schemes may allow further subdivision of a tile into one or more bricks, each of which consisting of a number of CTU rows within the tile. A tile that is not partitioned into multiple bricks may also be referred to as a brick. However, a brick that is a true subset of a tile is not referred to as a tile.

In some video coding schemes, such as H.264/AVC, HEVC and WC, a coded picture may be partitioned into one or more slices. A slice may be decodable independently of other slices of a picture and hence a slice may be considered as a preferred unit for transmission. In some video coding schemes, such as H.264/AVC, HEVC, and VVC, a video coding layer (VCL) NAL unit contains exactly one slice.

A slice may comprise an integer number of elementary coding blocks, such as CTUs in HEVC or VVC.

In some video coding schemes, such as WC, a slice contains an integer number of tiles of a picture or an integer number of CTU rows of a tile.

In some video coding schemes, two modes of slices may be supported, namely the raster-scan slice mode and the rectangular slice mode. In the raster-scan slice mode, a slice contains a sequence of tiles in a tile raster scan of a picture. In the rectangular slice mode, a slice contains an integer number of tiles of a picture or an integer number of CTU rows of a tile that collectively form a rectangular region of the picture.

A non-VCL NAL unit may be for example one of the following types: a video parameter set (VPS), a sequence parameter set (SPS), a picture parameter set (PPS), an adaptation parameter set (APS), a supplemental enhancement information (SEI) NAL unit, a picture header (PH) NAL unit, an end of sequence NAL unit, an end of bitstream NAL unit, or a filler data NAL unit. Some non-VCL NAL units, such as parameter sets and picture headers, may be needed for the reconstruction of decoded pictures, whereas many of the other non-VCL NAL units might not be necessary for the reconstruction of decoded sample values.

Some coding formats specify parameter sets that may carry parameter values needed for the decoding or reconstruction of decoded pictures. Some examples of different types of parameter sets are briefly described in this paragraph. A video parameter set (VPS) may include parameters that are common across multiple layers in a coded video sequence or describe relations between layers. Parameters that remain unchanged through a coded video sequence (in a single-layer bitstream) or in a coded layer video sequence may be included in a sequence parameter set (SPS). In addition to the parameters that may be needed by the decoding process, the sequence parameter set may optionally contain video usability information (VUI), which includes parameters that may be important for buffering, picture output timing, rendering, and resource reservation. A picture parameter set (PPS) contains such parameters that are likely to be unchanged in several coded pictures. A picture parameter set may include parameters that can be referred to by the coded image segments of one or more coded pictures. A header parameter set (HPS) has been proposed to contain such parameters that may change on picture basis. In WC, an Adaptation Parameter Set (APS) may comprise parameters for decoding processes of different types, such as adaptive loop filtering or luma mapping with chroma scaling.

A parameter set may be activated when it is referenced e.g., through its identifier. For example, a header of an image segment, such as a slice header, may contain an identifier of the PPS that is activated for decoding the coded picture containing the image segment. A PPS may contain an identifier of the SPS that is activated, when the PPS is activated. An activation of a parameter set of a particular type may cause the deactivation of the previously active parameter set of the same type.

Instead of or in addition to parameter sets at different hierarchy levels (e.g., sequence and picture), video coding formats may include header syntax structures, such as a sequence header or a picture header. A sequence header may precede any other data of the coded video sequence in the bitstream order. A picture header may precede any coded video data for the picture in the bitstream order.

Video coding specifications may enable the use of supplemental enhancement information (SEI) messages or alike. Some video coding specifications include SEI NAL units, and some video coding specifications contain both prefix SEI NAL units and suffix SEI NAL units. A prefix SEI NAL unit can start a picture unit or alike; and a suffix SEI NAL unit can end a picture unit or alike. Hereafter, an SEI NAL unit may equivalently refer to a prefix SEI NAL unit or a suffix SEI NAL unit. An SEI NAL unit includes one or more SEI messages, which are not required for the decoding of output pictures but may assist in related processes, such as picture output timing, post-processing of decoded pictures, rendering, error detection, error concealment, and resource reservation.

Several SEI messages are specified in H.264/AVC, H.265/HEVC, H.266/WC, and H.274/VSEI standards, and the user data SEI messages enable organizations and companies to specify SEI messages for specific use. The standards may contain the syntax and semantics for the specified SEI messages but a process for handling the messages in the recipient might not be defined. Consequently, encoders may be required to follow the standard specifying a SEI message when they create SEI message(s), and decoders might not be required to process SEI messages for output order conformance. One of the reasons to include the syntax and semantics of SEI messages in standards is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

SEI prefix indications should provide sufficient information for indicating what type of processing is needed or what type of content is included. The former (type of processing) indicates decoder-side processing capability, e.g., whether some type of frame unpacking is needed. The latter (type of content) indicates, for example, whether the bitstream contains subtitle captions in a particular language.

The content of an SEI prefix indication SEI message may, for example, be used by transport-layer or systems-layer processing elements to determine whether the CVS is suitable for delivery to a receiving and decoding system, based on whether the receiving system can properly process the CVS to enable an adequate user experience or whether the CVS satisfies the application needs.

The phrase along the bitstream (e.g., indicating along the bitstream) or along a coded unit of a bitstream (e.g., indicating along a coded tile) may be used in claims and described embodiments to refer to transmission, signaling, or storage in a manner that the "out-of-band" data is associated with but not included within the bitstream or the coded unit, respectively. The phrase decoding along the bitstream or along a coded unit of a bitstream or alike may refer to decoding the referred out-of-band data (which may be obtained from out-of-band transmission, signaling, or storage) that is associated with the bitstream or the coded unit, respectively. For example, the phrase along the bitstream may be used when the bitstream is contained in a container file, such as a file conforming to the ISO Base Media File Format, and certain file metadata is stored in the file in a manner that associates the metadata to the bitstream, such as boxes in the sample entry for a track containing the bitstream, a sample group for the track containing the bitstream, or a timed metadata track associated with the track containing the bitstream.

A coded picture is a coded representation of a picture.

A bitstream may be defined as a sequence of bits, which may in some coding formats or standards be in the form of a NAL unit stream or a byte stream, that forms the representation of coded pictures and associated data forming one or more coded video sequences. A first bitstream may be followed by a second bitstream in the same logical channel, such as in the same file or in the same connection of a communication protocol. An elementary stream (in the context of video coding) may be defined as a sequence of one or more bitstreams. In some coding formats or standards, the end of the first bitstream may be indicated by a specific NAL unit, which may be referred to as the end of bitstream (EOB) NAL unit and which is the last NAL unit of the bitstream.

A coded video sequence (CVS) may be defined as such a sequence of coded pictures in decoding order that is independently decodable and is followed by another coded video sequence or the end of the bitstream.

The subpicture feature of VVC allows for partitioning of the VVC bitstream in a flexible manner as multiple rectangles representing subpictures, where each subpicture comprises one or more slices. In other words, a subpicture may be defined as a rectangular region of one or more slices within a picture, wherein the one or more slices are complete. Consequently, a subpicture consists of one or more slices that collectively cover a rectangular region of a picture. The slices of a subpicture may be required to be rectangular slices.

In WC, the feature of subpictures enables efficient extraction of subpicture(s) from one or more bitstream and merging the extracted subpictures to form another bitstream without excessive penalty in compression efficiency and without modifications of VCL NAL units (i.e., slices).

The use of subpictures in a coded video sequence (CVS), however, requires appropriate configuration of the encoder and other parameters such as SPS/PPS and so on. In WC, a layout of partitioning of a picture to subpictures may be indicated in and/or decoded from an SPS. A subpicture layout may be defined as a partitioning of a picture to subpictures. In VVC, the SPS syntax indicates the partitioning of a picture to subpictures by providing for each subpicture syntax elements indicative of: the x and y coordinates of the top-left corner of the subpicture, the width of the subpicture, and the height of the subpicture, in CTU units. One or more of the following properties may be indicated (e.g. by an encoder) or decoded (e.g. by a decoder) or inferred (e.g. by an encoder and/or a decoder) for the subpictures collectively or per each subpicture individually: i) whether or not a subpicture is treated like a picture in the decoding process (or equivalently, whether or not subpicture boundaries are treated like picture boundaries in the decoding process); in some cases, this property excludes in-loop filtering operations, which may be separately indicated/decoded/inferred; ii) whether or not in-loop filtering operations are performed across the subpicture boundaries. When a subpicture is treated like a picture in the decoding process, any references to sample locations outside the subpicture boundaries are saturated to be within the subpicture boundaries. This may be regarded being equivalent to padding samples outside subpicture boundaries with the boundary sample values for decoding the subpicture. Consequently, motion vectors may be allowed to cause references outside subpicture boundaries in a subpicture that is extractable.

An independent subpicture (a.k.a. an extractable subpicture) may be defined as a subpicture i) with subpicture boundaries that are treated as picture boundaries and ii) without loop filtering across the subpicture boundaries. A dependent subpicture may be defined as a subpicture that is not an independent subpicture.

In video coding, an isolated region may be defined as a picture region that is allowed to depend only on the corresponding isolated region in reference pictures and does not depend on any other picture regions in the current picture or in the reference pictures. The corresponding isolated region in reference pictures may be for example the picture region that collocates with the isolated region in a current picture. A coded isolated region may be decoded without the presence of any picture regions of the same coded picture.

A VVC subpicture with boundaries treated like picture boundaries may be regarded as an isolated region.

A motion-constrained tile set (MCTS) is a set of tiles such that the inter prediction process is constrained in encoding such that no sample value outside the MCTS, and no sample value at a fractional sample position that is derived using one or more sample values outside the motion-constrained tile set, is used for inter prediction of any sample within the motion-constrained tile set. Additionally, the encoding of an MCTS is constrained in a manner that no parameter prediction takes inputs from blocks outside the MCTS. For example, the encoding of an MCTS is constrained in a manner that motion vector candidates are not derived from blocks outside the MCTS. In HEVC, this may be enforced by turning off temporal motion vector prediction of HEVC, or by disallowing the encoder to use the temporal motion vector prediction (TMVP) candidate or any motion vector prediction candidate following the TMVP candidate in a motion vector candidate list for prediction units located directly left of the right tile boundary of the MCTS except the last one at the bottom right of the MCTS.

In general, an MCTS may be defined to be a tile set that is independent of any sample values and coded data, such as motion vectors, that are outside the MCTS. An MCTS sequence may be defined as a sequence of respective MCTSs in one or more coded video sequences or alike. In some cases, an MCTS may be required to form a rectangular area. It should be understood that depending on the context, an MCTS may refer to the tile set within a picture or to the respective tile set in a sequence of pictures. The respective tile set may be, but in general need not be, collocated in the sequence of pictures. A motion-constrained tile set may be regarded as an independently coded tile set, since it may be decoded without the other tile sets. An MCTS is an example of an isolated region.

The VVC (Versatile Video Coding) has a functionality of subpictures which may be regarded to improve the motion constrained tiles. VVC support for real-time conversational and low latency use cases will be important to fully exploit the functionality and end user benefit with modern networks (e.g., ULLRC 5G networks, OTT delivery, etc.). VVC encoding and decoding is computationally complex. With increasing computational complexity, the end-user devices consuming the content are heterogeneous for example devices supporting single decoding instances to devices supporting multiple decoding instances and more sophisticated devices having multiple decoders. Consequently, the system carrying the payload should be able to support a variety of scenarios for scalable deployments. There has been rapid growth in the resolution (e.g., 8K) of the video consumed via CE (Consumer Electronics) devices (e.g., TVs, mobile devices) which can benefit with the ability to execute multiple parallel decoders. One example use case can be parallel decoding for low latency unicast or multicast delivery of 8K VVC encoded content.

A substitute subpicture may be defined as a subpicture that is not intended for displaying. A substitute subpicture may be included in the bitstream in order to have a complete partitioning of a picture to subpictures. A substitute subpicture may be included in the picture when no other subpictures are available for a particular subpicture location in the subpicture layout. In an example, a substitute subpicture may be included in a coded picture when another subpicture is not received early enough, e.g., based on a decoding time of a picture, or a buffer occupancy level falls below a threshold.

In an example, a substitute subpicture may be made available and delivered to a receiver or player prior to it is potentially merged into a bitstream to be decoded. For example, a substitute subpicture may be delivered to a receiver at session setup. In another example, a substitute subpicture may be generated by a receiver or player.

Encoding of a substitute subpicture may comprise encoding one or more slices. According to an example, a substitute subpicture is coded as an intra slice that represents a constant colour. The coded residual signal may be absent or zero in a substitute subpicture. According to an example, a substitute subpicture is encoded as an intra random access point (IRAP) subpicture. The IRAP subpicture may be coded with reference to a picture parameter set (PPS) with pps_rpl_info_in_ph_flag equal to 1 as specified in H.266/WC.

Real-time Transport Protocol (RTP) is widely used for real-time transport of timed media such as audio and video. RTP may operate on top of the User Datagram Protocol (UDP), which in turn may operate on top of the Internet Protocol (IP). RTP is specified in Internet Engineering Task Force (IETF) Request for Comments (RFC) 3550, available from www.ietf.org/rfc/rfc3550.txt. In RTP transport, media data is encapsulated into RTP packets. Typically, each media type or media coding format has a dedicated RTP payload format.

RTP is designed to carry a multitude of multimedia formats, which permits the development of new formats without revising the RTP standard. To this end, the information required by a specific application of the protocol is not included in the generic RTP header. For a class of applications (e.g., audio, video), an RTP profile may be defined. For a media format (e.g., a specific video coding format), an associated RTP payload format may be defined. Every instantiation of RTP in a particular application may require a profile and payload format specifications. For example, an RTP profile for audio and video conferences with minimal control is defined in RFC 3551, and an Audio-Visual Profile with Feedback (AVPF) is specified in RFC 4585. The profile may define a set of static payload type assignments and/or may use a dynamic mechanism for mapping between a payload format and a payload type (PT) value using Session Description Protocol (SDP). The latter mechanism is used for newer video codec such as RTP payload format for H.264 defined in RFC 6184 or RTP Payload Format for HEVC defined in RFC 7798.

An RTP session is an association among a group of participants communicating with RTP. It is a group communications channel which can potentially carry a number of RTP streams. An RTP stream is a stream of RTP packets comprising media data. An RTP stream is identified by an SSRC belonging to a particular RTP session. SSRC refers to either a synchronization source or a synchronization source identifier that is the 32-bit SSRC field in the RTP packet header. A synchronization source is characterized in that all packets from the synchronization source form part of the same timing and sequence number space, so a receiver device may group packets by synchronization source for playback. Examples of synchronization sources include the sender of a stream of packets derived from a signal source such as a microphone or a camera, or an RTP mixer. Each RTP stream is identified by a SSRC that is unique within the RTP session.

The RTP specification recommends even port numbers for RTP, and the use of the next odd port number for the associated RTCP session. A single port can be used for RTP and RTCP in applications that multiplex the protocols.

RTP packets are created at the application layer and handed to the transport layer for delivery. Each unit of RTP media data created by an application begins with the RTP packet header.

The RTP header has a minimum size of 12 bytes. After the header, optional header extensions may be present. This is followed by the RTP payload, the format of which is determined by the particular class of application. The fields in the RTP header comprise the following:
- Version: (2 bits) Indicates the version of the protocol.
- P (Padding): (1 bit) Used to indicate if there are extra padding bytes at the end of the RTP packet.
- X (Extension): (1 bit) Indicates presence of an extension header between the header and payload data. The extension header is application or profile specific.
- CC (CSRC count): (4 bits) Contains the number of CSRC identifiers that follow the SSRC.
- M (Marker): (1 bit) Signaling used at the application level in a profile-specific manner. If it is set, it means that the current data has some special relevance for the application.
- PT (Payload type): (7 bits) Indicates the format of the payload and thus determines its interpretation by the application.
- Sequence number: (16 bits) The sequence number is incremented for each RTP data packet sent and is to be used by the receiver to detect packet loss and to accommodate out-of-order delivery.
- Timestamp: (32 bits) Used by the receiver to play back the received samples at appropriate time and interval. When several media streams are present, the timestamps may be independent in each stream. The granularity of the timing is application specific. For example, video streams typically use a 90 kHz clock. The clock granularity is one of the details that is specified in the RTP profile for an application.
- SSRC: (32 bits) Synchronization source identifier uniquely identifies the source of a stream. The synchronization sources within the same RTP session will be unique.
- CSRC: (32 bits each) Contributing source IDs enumerate contributing sources to a stream which has been generated from multiple sources.
- Header extension: (optional, presence indicated by Extension field) The first 32-bit word contains a profile-specific identifier (16 bits) and a length specifier (16 bits) that indicates the length of the extension in 32-bit units, excluding the 32 bits of the extension header. The extension header data follows.

Real-time control protocol (RTCP) enables monitoring of the data delivery in a manner scalable to large multicast networks and provides minimal control and identification functionality. An RTCP stream accompanies an RTP stream. RTCP sender report (SR) packets are sent from the sender to the receiver (i.e., in the same direction as the media in the respective RTP stream). RTCP receiver report (RR) packets are sent from the receiver to the sender.

A point-to-point RTP session is consists of two endpoints, communicating using unicast. Both RTP and RTCP traffic are conveyed endpoint to endpoint.

Many multipoint audio-visual conferences operate utilizing a centralized unit, which may be called Multipoint Control Unit (MCU). An MCU may implement the functionality of an RTP translator or an RTP mixer. An RTP translator may be a media translator that may modify the media inside the RTP stream. A media translator may for example decode and re-encode the media content (i.e., transcode the media content). An RTP mixer is a middlebox that aggregates multiple RTP streams that are part of a session by generating one or more new RTP streams. An RTP mixer may manipulate the media data. One common application for a mixer is to allow a participant to receive a session with a reduced number of resources compared to receiving individual RTP streams from all endpoints. A mixer can be viewed as a device terminating the RTP streams received from other endpoints in the same RTP session. Using the media data carried in the received RTP streams, a mixer generates derived RTP streams that are sent to the receiving endpoints.

The Session Description Protocol (SDP) may be used to convey media details, transport addresses, and other session description metadata, when initiating multimedia teleconferences, voice-over-IP calls, or other multimedia delivery sessions. SDP is a format for describing multimedia communication sessions for the purposes of announcement and invitation. SDP does not deliver any media streams itself but may be used between endpoints e.g., for negotiation of network metrics, media types, and/or other associated properties. SDP is extensible for the support of new media types and formats.

SDP uses attributes to extend the core protocol. Attributes can appear within the Session or Media sections and are scoped accordingly as session-level or media-level. New attributes can be added to the standard through registration with IANA. A media description may contain any number of "a=" lines (attribute-fields) that are media description specific. Session-level attributes convey additional information that applies to the session as a whole rather than to individual media descriptions.

The "fmtp" attribute of SDP allows parameters that are specific to a particular format to be conveyed in a way that SDP does not have to understand them. The format must be one of the formats specified for the media. Format-specific parameters, semicolon separated, may be any set of parameters required to be conveyed by SDP and given unchanged to the media tool that will use this format. At most one instance of this attribute is allowed for each format.

The SDP offer/answer model specifies a mechanism in which endpoints achieve a common operating point of media details and other session description metadata when initiating the multimedia delivery session. One endpoint, the offerer sends a session description (the offer) to the other endpoint, the answerer. The offer contains all the media parameters needed to exchange media with the offerer, including codecs, transport addresses, and protocols to transfer media. When the answerer receives an offer, it elaborates an answer and sends it back to the offerer. The answer contains the media parameters that the answerer is willing to use for that particular session. SDP may be used as the format for the offer and the answer.

An initial SDP offer includes zero or more media streams, wherein each media stream is described by an "m=" line and its associated attributes. Zero media streams implies that the offerer wishes to communicate, but that the streams for the session will be added at a later time through a modified offer.

A direction attribute may be used in the SDP offer/answer model as follows. If the offerer wishes to only send media on a stream to its peer, it marks the stream as sendonly with the "a=sendonly" attribute. If the offerer wishes to only receive media from its peer, it marks the stream as recvonly. If the offerer wishes to both send and receive media with its peer, it may include an "a=sendrecv" attribute in the offer, or it may omit it, since sendrecv is the default.

In the SDP offer/answer model, the list of media formats for each media stream comprises the set of formats (codecs and any parameters associated with the codec, in the case of RTP) that the offerer is capable of sending and/or receiving (depending on the direction attributes). If multiple formats are listed, it means that the offerer is capable of making use of any of those formats during the session and thus the answerer may change formats in the middle of the session, making use of any of the formats listed, without sending a new offer. For a sendonly stream, the offer indicates those formats the offerer is willing to send for this stream. For a recvonly stream, the offer indicates those formats the offerer is willing to receive for this stream. For a sendrecv stream, the offer indicates those codecs or formats that the offerer is willing to send and receive with. The list of media formats in the "m=" line is listed in the order preference, the first entry in the list being the most preferred.

SDP may be used for declarative purposes, e.g., for describing a stream available to be received over a streaming session. For example, SDP may be included in Real Time Streaming Protocol (RTSP).

A Multipurpose Internet Mail Extension (MIME) is an extension to an email protocol which makes it possible to transmit and receive different kinds of data files on the Internet, for example video, audio, images, and software. An internet media type is an identifier used on the Internet to indicate the type of data that a file contains. Such internet media types may also be called as content types. Several MIME type/subtype combinations exist that can contain different media formats. Content type information may be included by a transmitting entity in a MIME header at the beginning of a media transmission. A receiving entity thus may need to examine the details of such media content to determine if the specific elements can be rendered given an available set of codecs. Especially when the end system has limited resources, or the connection to the end system has limited bandwidth, it may be helpful to know from the content type alone if the content can be rendered.

One of the original motivations for MIME is the ability to identify the specific media type of a message part. However, due to various factors, it is not always possible from looking at the MIME type and subtype to know which specific media formats are contained in the body part or which codecs are indicated in order to render the content. Optional media parameters may be provided in addition to the MIME type and subtype to provide further details of the media content.

Optional media parameters may be conveyed in SDP, e.g., using the "a=fmtp" line of SDP. Optional media parameters may be specified to apply for certain direction attribute(s) with an SDP offer/answer and/or for declarative purposes. Optional media parameters may be specified not to apply for certain direction attribute(s) with an SDP offer/answer and/or for declarative purposes. Semantics of optional media parameters may depend on and may differ based on which direction attribute(s) of an SDP offer/answer they are used with and/or whether they are used for declarative purposes.

One example of an optional media parameter specified for VVC is sprop-sps. When present, sprop-sps conveys SPS NAL units of the bitstream for out-of-band transmission of SPSs. The value of sprop-sps may be defined as a comma-separated list, where each list element is a base64 representation (as defined in RFC 4648) of an SPS NAL unit.

Another example of an optional media parameter specified for VVC is sprop-sei. When present, sprop-sei conveys one or more SEI messages that describe bitstream characteristics. A decoder can rely on the bitstream characteristics that are described in the SEI messages carried within sprop-sei for the entire duration of the session, independently of the persistence scopes of the SEI messages specified in H.274/VSEI or VVC. The value of sprop-sei may be defined as a comma-separated list, where each list element is a base64 representation (as defined in RFC 4648) of an SEI NAL unit.

Media coding standards may specify "profiles" and "levels." A profile may be defined as a subset of algorithmic features of the standard (of the encoding algorithm or the equivalent decoding algorithm). In another definition, a profile is a specified subset of the syntax of the standard (and hence implies that the encoder may only use features that result into a bitstream conforming to that specified subset and the decoder may only support features that are enabled by that specified subset).

A level may be defined as a set of limits to the coding parameters that impose a set of constraints in decoder resource consumption. In another definition, a level is a defined set of constraints on the values that may be taken by the syntax elements and variables of the standard. These constraints may be simple limits on values. Alternatively, or in addition, they may take the form of constraints on arithmetic combinations of values (e.g., picture width multiplied by picture height multiplied by number of pictures decoded per second). Other means for specifying constraints for levels may also be used. Some of the constraints specified in a level may for example relate to the maximum picture size, maximum bitrate and maximum data rate in terms of coding units, such as macroblocks, per a time period, such as a second. The same set of levels may be defined for all profiles. It may be preferable for example to increase interoperability of terminals implementing different profiles that most or all aspects of the definition of each level may be common across different profiles.

A tier may be defined as a specified category of level constraints imposed on values of the syntax elements in the bitstream, where the level constraints are nested within a tier and a decoder conforming to a certain tier and level would be capable of decoding all bitstreams that conform to the same tier or the lower tier of that level or any level below it.

Some media coding specifications may not define the concept of a tier. Consequently, an indicated profile and level can be used to signal properties of a media stream and/or to signal the capability of a media decoder. Some media coding specifications may define the concept of a tier. Consequently, an indicated combination of a profile, tier, and level can be used to signal properties of a media stream and/or to signal the capability of a media decoder.

Profile, tier, and level syntax structures in VPS and SPS contain profile, tier, level information for layers associated with one or more output layer sets specified by the VPS, and for any layer that refers to the SPS, respectively. An output layer set may be defined as A set of layers for which one or more layers are specified as the output layers. An output layer may be defined as a layer of an output layer set that is output. The decoding process may be defined in a manner that when both a picture is marked as an output picture in the bitstream or inferred to be an output picture and the picture is in an output layer of an output layer set at which the decoder is operating, the decoded picture is output by the decoding process. If a picture is not marked or inferred to be an output picture or the picture is not in an output layer of an output layer set at which the decoder is operating, the decoded picture is not output by the decoding process.

The current draft of RTP Payload Format for Versatile Video Coding (WC) does not cover the functionality of subpictures, which is an important feature of VVC.

An RTP payload format defines following processes required for transport of VVC coded data over RTP:
- usage of RTP header with the payload format;
- packetization of VVC coded NAL units into RTP packets, using three types of payload structure: a single NAL unit packet, aggregation packet, and fragment packet
- transmission of VVC NAL units of the same bitstream within a single RTP stream;
- media type parameters to be used with the session description protocol (SDP);
- usage of RTCP feedback messages.

A single NAL unit packet may carry only a single NAL unit in an RTP payload. The NAL header type field in the RTP payload header is equal to the original NAL unit type in the bitstream. An aggregation packet may be used to aggregate multiple NAL units into a single RTP payload. A fragmentation packet (a.k.a. a fragmentation unit) may be used to fragment a single NAL unit over multiple RTP packets.

However, VVC RTP payload format does not define any specific support for subpictures creation control or depacketization or extraction, nor parallel decoding of subpictures from the VVC bitstream. In addition, the current version of IETF draft has no description of sender and receiver's signalling for the desired bitstream partitioning with subpictures. Currently the IETF draft does not carry any information for handling of subpictures. Overall, the support for efficient subpicture extraction from the VVC bitstream is not present for RTP-based carriage.

Frame marking RTP header extension is an IETF draft in progress to convey information about frames which are not accessible to the network elements due to lack of access to decryption keys. However, the IETF draft does not address the scenario of accessing subpictures from a high level in case of encrypted RTP payload.

Many, but not all devices and operating systems support multiple parallel video decoder instances. In operating systems that support multiple processes and threads, parallel software decoding can usually be realized. In many handheld devices, parallel video decoding may be realized with hardware-accelerated decoding. In such devices, parallel decoding can improve the processing capacity (in terms of samples/second) when compared to using a single decoder instance.

HEVC supports parallel decoding approaches which consists of slices, tiles and WPP (wavefront parallel processing). The HEVC codec and consequently RFC 7798 does not support the use of multiple decoder instances. In contrast, VVC supports the use of one or more decoder instances to leverage availability of additional resources in the current receiver devices. This support for decoding a single picture with multiple decoder instances is feasible in case of coded video sequence (CVS) comprising multiple independent subpictures. HEVC RFC 7798 has the parameter dec-parallel-cap to indicate the need for parallelism. Due to the permissiveness of in-picture prediction between neighboring treeblock rows within a picture, the required interprocessor/inter-core communication to enable in-picture prediction can be substantial. This is one implication of using WPP for parallelism. If loop filtering across tile boundaries is turned off, then no inter-process communication is needed. If loop filtering across tile boundaries is enabled, then either loop filtering across tile boundaries is done after all tiles have been decoded, or decoding of tiles is performed in raster scan order, and loop filtering is carried out across boundaries of decoded tiles (in both sides of the boundary). There is no support for indicating the need for having multiple decoder support. There is no support to create parallel decoding such that the output of the individual decoders need not wait for all the constituent subpictures. This allows for low latency content reception which can be of use in new applications such as machine learning based content analysis.

The present embodiments provide one or more new capability attributes for a sender to indicate information on subpicture encoding capability, wherein the information may be indicative of one or more of the following:
- the number of supported subpictures in the sender;
- bitstream properties applicable to a subpicture sequence or a set of subpicture sequences (but not entire bitstream), such as a profile-tier-level combination applicable to a subpicture sequence;
- the capability of encoding independent and/or dependent subpictures;
- the capability of turning loop filtering on and/or off across subpicture boundaries.

According to an embodiment, one or more new capability attributes are proposed for a receiver to indicate information on subpicture decoding capability or preference, wherein the information may be indicative of one or more of the following:
- the number of subpictures;
- bitstream properties applicable to a subpicture sequence or a set of subpictures sequences (but not the entire bitstream), such as a profile-tier-level combination applicable to a subpicture sequence;
- indication for independent and/or dependent subpictures;
- indication for turning loop filtering on or off across subpicture boundaries.

It needs to be understood that the term capability attribute may indicate a capability of an endpoint (e.g., a sender or a receiver) and/or properties of a transmitted stream and/or properties of a bitstream that is supported or preferred for reception.

In an embodiment, a capability attribute comprises an optional MIME parameter for a media format. However, embodiments are not limited to capability attribute(s) being MIME parameters.

According to another embodiment, a receiver may indicate whether the required subpictures should be independent subpictures or dependent subpictures.

According to an embodiment, to enable multiple decoders and/or multiple decoding instances, the capability of the multiple decoder instances at the receiver is specified. According to an embodiment, the receiver indicates the highest profile, level and tier which can be supported by each of the independent decoders and/or decoding instances.

According to an embodiment, all the SPSs or a subset of SPSs for all the possible CVSs is signaled out of band. According to another embodiment, all the SPS's or a subset of SPS's for all the possible CVSs is signaled in-band.

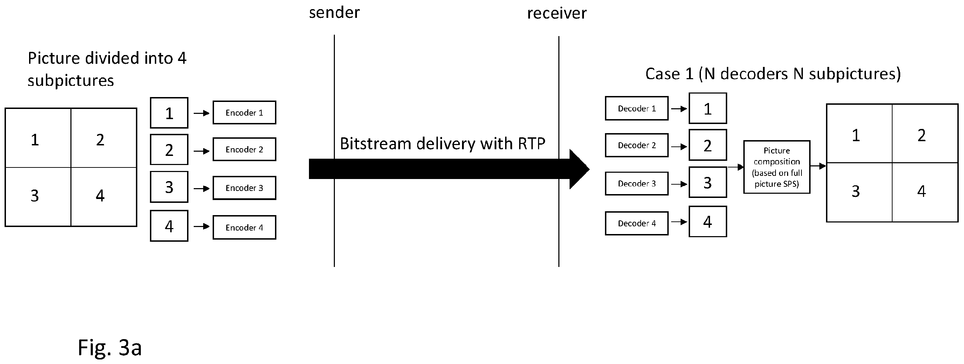

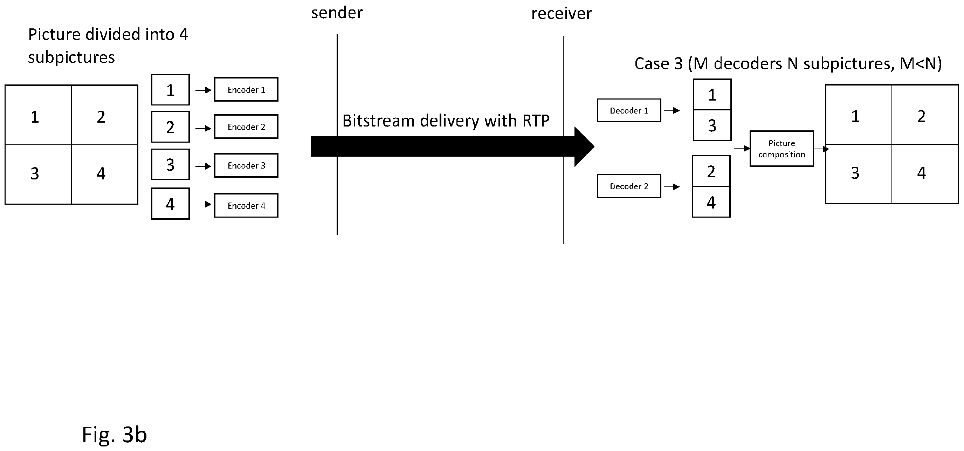

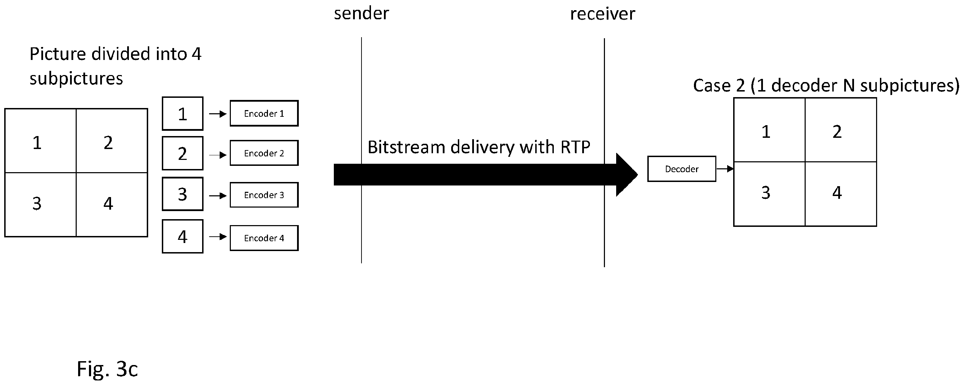

According to an example embodiment, the SPS of the combined subpicture CVS, for example the SPS of the combination of subpictures 1, 2, 3 and 4 in Fig. 3c is signaled out of band. According to an embodiment, if the SPS is signaled out-of-band, the parameter set needs to be stored for the duration of the session. According to another example embodiment, the SPSs of individual subpictures, for example four SPSs, SPS1, SPS2, SPS3 and SPS4 of the corresponding subpictures 1, 2, 3 and 4, respectively of Fig. 3a is signaled in-band for independent decoding of the subpictures as independent CVS's. According to another example embodiment, the SPSs of a subset of subpictures, for example two SPSs, SPS1 corresponding to subpictures 1, 2 and SPS2 of the corresponding subpictures 3 and 4, respectively of Fig. 3b are signaled in-band for decoding of the combined subset of subpictures as independent CVSs.

In a combined subpicture decoding (where multiple subpictures are combined to a single VVC bitstream) embodiment, the parameter sets are signaled in-band for combined decoding of two or more subpictures as a CVS. According to an embodiment, if the SPS of the combined subpicture CVS is signaled in-band, the receiver is expected to store the said SPS for accessing the subpicture layout information.

According to an embodiment, the SPSs for the one or more subpictures (for independent decoding) as well as the combined CVS can be delivered by the sender in the session negotiation (or out of band). The combined CVS refers to a merge of a subset of subpictures. This will reduce the complexity for the receiver or MCU/SFU to generate the parameter sets for using independent decoders.

According to an embodiment, there can be additional flag(s) to indicate if the sender creates parameter sets for independent decoding of each of the independent subpictures. If the flag indicates 0, for example, the receiver is expected to derive the parameter sets for the independent decoding.

The previously discussed embodiments are clarified by the following use case: A receiver or a consumption device, for example an 8K TV, may be equipped with multiple decoders or the decoder may support multiple decoder instances. Figures 3a, 3b and 3c illustrate such an architecture where the content, for example a video frame is divided into four different regions and each region is encoded as a VVC subpicture. The system provides provisions to consume/decode each VVC subpicture independently as illustrated in Figure 3a or to be consumed as a subset of VVC subpictures (each subset containing two subpictures) as illustrated in Figure 3b or to be consumed together (single decoder instance) as illustrated in Figure 3c.

To support the delivery and consumption of VVC coded subpictures, the application needs to provide facilities that support the three different scenarios depicted in Figures 3a, 3b and 3c. It would help if the sender knew about the receiver intent and capability. The required encoding configuration should be mutually agreed between the sender and the receiver so that the sender/an entity in the system can inform the encoder to create a bitstream which can be optimally utilized by the one or more decoders in the receiver.

For each or a subset of VVC subpictures to be decoded independently at the consumption devices either of the two following scenarios is to be realized:
1) the receiver (e.g., TV) needs to generate appropriate parameter sets (for example SPS/PPS) for individual subpicture decoding as an independent coded sequence or a subset of subpicture decoding by merging two or more subpictures before decoding each of the merged bitstreams as independently coded video sequence.
2) the sender needs to deliver the required parameter sets (for example SPS/PPS) for individual or a subset of subpicture decoding.

For the above system to be realized, according to an example embodiment, the sender delivers a new capability attribute to indicate the number of supported subpictures as subpics-cap parameter. According to an embodiment, the value of subpics-cap is an integer value in a range from 1 to n, where the value 1 may indicate that the sender supports the delivery of single subpicture in a VVC picture/frame and the value n may be limited by the number of subpictures as constrained for a specific level in WC, the level which is supported by the sender.

According to an example embodiment, the receiver indicates the preference for the number of subpictures as a new capability attribute recv-ind-subpics-cap. According to an example embodiment the value of recv-ind-subpics-cap is an integer value in a range from 1 to n (i.e. base10 integer), where the value 1 may indicate that the receiver prefers to have a single subpicture in a VVC picture/frame and the value n may be limited by the number of subpicture as defined for a specific level in VVC, the level which is mutually agreed between the sender and the receiver. According to another example embodiment a receiver may indicate whether the required subpictures should be independent subpictures or dependent subpictures.

The parameter sets or the non-VCL NAL units required for the combined subpicture CVS is signaled out of band. According to an embodiment, if the parameter sets or the non-VCL NAL units is signaled out-of-band, the parameter sets or the non-VCL NAL units needs to be stored for the duration of the session or until a new set is made available which is compatible with the earlier parameters, or else a session re-negotiation can be performed. According to another example embodiment, the parameter sets or the non-VCL NAL units of the combined subpicture CVS is signaled in-band. According to an embodiment, if the parameter sets or the non-VCL NAL units of the combined subpicture CVS is signaled in-band the receiver is expected to store the parameter sets or the non-VCL NAL units for accessing the layout information (picture composition) as shown in Figure 3a.

The parameter sets or the non-VCL NAL units for one or more subpictures as well as the combined CVS can be delivered by the sender in the session negotiation as part of one or more MIME parameter values delivered with the "a=fmtp" line in SDP. This will reduce the complexity for the receiver or MCU/SFU to generate the parameter sets or the non-VCL NAL units for using independent decoders. In an embodiment, the parameter sets or the non-VCL NAL units for one or more subpictures as well as the combined CVS are carried in the sprop-sps parameter that is extended to indicate which set of subpictures contained SPS applies to. In an embodiment, the parameter sets or the non-VCL NAL units for one or more subpictures as well as the combined CVS are carried in a new subpic-sps parameter that is indicates a list of pairs, where each pair indicates an SPS and a set of subpictures (the subpictures are identified by subpicture identifier) that the SPS applies to. In an embodiment, the parameter sets or the non-VCL NAL units for one or more subpictures as well as the combined CVS are carried in the sprop-sei parameter that contains an SEI NAL unit containing a scalable nesting SEI message indicating the subpictures that the nested SEI messages apply to, and a nested SEI message that contains an SPS (or its payload).

According to an example embodiment, there can be an additional flag called the rec_ind_subpics_params_cap to indicate if the sender creates parameter sets or the non-VCL NAL units for independent decoding of each of the independent subpictures. As an example, if the flag rec_ind_subpics_params_cap indicates 0, the receiver is expected to derive the parameter sets or the non-VCL NAL units for independent decoding of subpictures.

According to an alternative example embodiment, the max-recv-level-id can be extended to contain a list of level combinations, where each level combination being an alternative that a receiver supports. According to an embodiment, the number of elements in each level combination indicates the number of decoder instances, and the highest supported level per each decoder instance. In an embodiment, the level combinations may be required to be in a preference order.

An example of using max-recv-level-id extended to contain a list of level combinations:
max-recv-level-id = (level-comb) +, where "+" is a white-space-separated list of 1 or more list elements and
level-comb = level+, where "+" is a comma-separated list of 1 or more list elements and level is a base10 integer in the range of 0 to 255, inclusive.

Another example of using max-recv-level-id extended to contain a list of level combinations:
max-recv-level-id = (level-comb) +, where "+" is a white-space-separated list of 1 or more list elements and
level-comb = level, num-dec, where level is a base10 integer in the range of 0 to 255, inclusive, and num-dec is a base10 integer indicating the number of decoders for subpictures.

According to an alternative example embodiment, a new attribute called recv-sei that contains one or more SEI messages (e.g., with base64 encoding) and is used to signal a receiver's requirements of the SEI messages that the sent bitstream shall comply.

According to an example embodiment, recv-sei is a parameter that may be used to signal a receiver's need(s) or preference(s) for processes related to decoding, display, or other purposes such as bitstream conformance.

According to an example embodiment, when the recv-sei parameter is present, the value of the parameter shall comply with the syntax and semantics of the SEI messages as specified in the VVC specification.

According to an example embodiment, the recv-sei parameter may carry any SEI messages specified in Rec. ITU-T H.274 | ISO/IEC 23002-7 or in the VVC standard.

According to an example embodiment, the persistence scope for some SEI messages is specified below.

| **SEI message** | **Persistence scope** |
|---|---|
| Scalable nesting | Depending on the scalable-nested SEI messages. Each scalable-nested SEI message has the same persistence scope as if the SEI message was not scalable-nested |
| Subpicture level information | For the duration of the RTP session or untill a new Subpicture level information SEI message is delivered by the receiver |

The SLI SEI message is delivered by the receiver to the sender as in-band RTP payload, RTCP feedback message or out-of-band. The RTCP feedback message can be to carry the SLI SEI message can be specified by defining a new RTCP feedback message packet, for example, in accordance with RFC 4585, payload specific feedback message.

According to an example embodiment, recv-sei containing a subpicture level information SEI message specified in VVC can be used to force the sender to use a specific number of subpictures with certain levels.

The VVC standard specifies the subpicture level information (SLI) SEI message. The SLI SEI message contains information about the level that subpicture sequences in the set of CVSs of the OLSs to which the SEI message applies, denoted as targetCvss, conform to. The OLSs to which the SLI message applies are also referred to as the applicable OLSs or the associated OLSs. A CVS in the remainder of this clause refers to a CVS of the applicable OLSs. A subpicture sequence consists of all subpictures within targetCvss that have the same value of subpicture index subpicldxA and belong to the layers in the multiSubpicLayers and all subpictures within targetCvss that have subpicture index equal to 0 and belong to the layers in the applicable OLSs but not in the multiSubpicLayers. A subpicture sequence is said to be associated with and identified by the subpicture index subpicldxA.

According to an example embodiment, recv-sei may comprise an SEI message with an empty SEI message payload to indicate that the receiver requires the SEI message to be present in the received bitstream but not to impose requirements on the content of the SEI message payload. According to an example embodiment, recv-sei may comprise an SEI prefix indication SEI message to indicate that the receiver requires the SEI message(s) listed in the SEI prefix indication SEI message to be present in the received bitstream but not to impose requirements on the content of the SEI message payload.

According to an example embodiment, a receiver includes an equirectangular projection SEI message in recv-sei to indicate that it requires video content in the equirectangular projection format.

According to an example embodiment, a receiver includes a cubemap projection SEI message or a generalized cubemap projection SEI message in recv-sei to indicate that it requires video content in the cubemap projection format.

According to an example embodiment, a receiver includes a frame packing arrangement SEI message in recv-sei to indicate that it requires video content where pictures comprise constituent pictures, e.g., for stereoscopic video.

According to an example embodiment, the negotiation between the sender and the receiver is indicated below (implementation embodiment).
1. Receiver is configured to signal its capability with recv-sei that contains a scalable nesting SEI message with SLI SEI message that indicates the number of subpictures and the levels for decoding subpicture sequences;
2. Sender is configured to create a combined video sequence CVSo comprising SPS₀ , which is the subpicture layout
3. Sender is configured to deliver SPSo for the combined video sequence CVSo comprising independent subpictures, the number of which is equal to the number indicated in the SLI SEI message above.
4. Sender is configured to create SPSi/PPSi for each independent subpicture decoded as a bitstream CVSi. The sender should copy all the required APS parameter sets while creating separate CVSi. The sender is configured to list the parameter sets in SDP parameter sets attribute as a list in the raster order of the subpictures, in addition to the parameter sets for the CVS₀. The sender can transmit these parameter sets in the same order as listed in the SDP parameter set attribute.
5. Receiver will convert CVSo into bitstreams each of which containing a subpicture sequence CVSi either by obtaining the parameter sets from the SDP or from in-band.
6. Each decoder outputs independent subpictures as individual pictures.
7. These individual pictures can be rendered together as a single picture using SPSo derived layout if that is the application requirement.

According to an example embodiment, the negotiation between the sender and the receiver for the three scenarios of Figure 3a, 3b and 3c is indicated below (implementation embodiment).

Case 1 (see Figure 3a):
1. Receiver is configured to signal its capability with recv_ind_subpics_cap equal 4;
2. Sender is configured to create a combined video sequence CVSo comprising SPS₀ , which is the subpicture layout
3. Sender is configured to deliver SPSo for the combined video sequence CVSo comprising 4 independent subpictures
4. Sender is configured to create SPSi/PPSi 4 CVSi, where i=1-4 (WC aware sender). The sender should copy all the required APS parameter sets while creating separate CVSi. The sender is configured to list the parameter sets in SDP parameter sets attribute as a list in the raster order of the subpictures, in addition to the parameter sets for the CVS₀. The sender can transmit these parameter sets in the same order as listed in the SDP parameter set attribute.
5. Receiver will convert CVSo into 4 CVSi i=1-4 (VVC aware receiver) either by obtaining the parameter sets from the SDP or from in-band.
6. Each decoder outputs independent subpictures as individual pictures.
7. These individual pictures can be rendered together as a single picture using SPSo derived layout if that is the application requirement.

According to an example embodiment at least one of the steps 4 and 5 is required.

According to an example embodiment, Step 4 assumes that the receiver is not VVC-aware but has the knowledge to store the related SPS/PPS parameters for independent decoding of subpictures.

According to an example embodiment, to simplify the initial join, a set of SPS/PPS for the CVSo as well as the CVSi are signaled in the SDP. Furthermore, they can be delivered in-band in the right subpicture delivery sequence. In another embodiment, the SPS/PPS may be delivered in-band before starting the delivery of each independent subpicture. In an embodiment, the receiver can store the parameter sets for each independent subpicture decoding via a separate decoder instance. The number of parameter sets (e.g., SPS/PPS per subpicture) required to make a subpicture independently decodable can be reduced by having additional constraints, such as similar properties and sizes for the multiple subpictures.

According to another example embodiment, multiple different subpicture layouts may be signaled in step 2 and receiver may select the one that fits its display purposes. For example, four subpictures may represent different camera views from different locations. Sender can select in which subpicture layout it wants to display them. Receiver may signal the selected layout as an enumerated value back to the sender. In another embodiment, receiver may indicate the desired layout by other means such as signaling a tensor for indicating the layout.

Use Case 2 (see Figure 1b):
1. Receiver is configured to signal recv_ind_subpics_cap equal to M1, M2, M3 (from multiple receivers)
2. MCU/SFU is configured to receive the configuration which can address subpicture needs for all the receivers and make it efficient for the MCU/SFU.
3. MCU/SFU is configured to determine the number of subpictures which can be independently decodable for the largest number of decoder instances.
4. MCU/SFU is configured to signal to the sender, the recv_ind_subpics_cap equal to the number of required independent subpictures.
5. Sender is configured to create a combined video sequence CVSo comprising SPSo which is the subpicture layout.
6. SFU/MCU is configured to create SPSi/PPSi 4 CVSi, where i=1-N (WC aware sender) for each of the receivers for the individual subpicture or merged subpicture decoding.
7. The receivers with lower number of decoder instances can merge the independent subpictures before feeding them to the decoder.

According to an example embodiment, MCU/SFU is expected to be capable of generating SPS/PPS for the receivers which need to decode the subpictures independently or with merged subpictures.

The same method is also applicable to a single receiver and a sender.

Use Case 3 (see Figure 1c):
1. Receiver is configured to signal recv_ind_subpics_cap equal 0, whereupon the number of dependent subpictures can be signaled as additional parameter recv_dep_subpics_cap OR provide 2 values (type of subpicture, 0 for dependent 1 for independent, followed by number of subpictures). The simplest would be to constraint "equal_size" flag to be equal to 1.
2. Sender is configured to create CVSo comprising SPSo which is the subpicture layout.
3. The sender is configured to deliver SPSo for the CVSo comprising 4 dependent subpictures. The sender is configured to deliver the NAL units of the subpictures in the desired decoding order. This approach facilitates the need for a consistent output picture from the decoder
4. Receiver is configured to deliver the subpictures in the specified decoding order to receive decoded picture for an AU.

Other than determination of subpicture decoding order, the receiver does not need any additional VVC aware operation.

### Session negotiation of parallel subpicture usage:

According to an example, shown in below, the offer and answer indicate the successful negotiation of session with use of subpicture capability in VVC RTP payload format. The value of the subpics-cap is equal to 4, indicating the support of 4 subpictures.

SDP offer:
m=video 49154 RTP/AVP 98 100 99
mid=100
a=tcap:1 RTP/AVPF
a=pcfg:1 t=1
b=AS:950
b=RS:0
b=RR:5000
/*omni video of room A*/
a=rtpmap:97 H266/90000
a=fmtp:97 profile-id=1; level-id=93; \
   sprop-vps=QAEMAf//AWAAAAMAgAAAAwAAAwA8LAUg; \
   sprop-vps=QAEMAf//AWAAAAMAgAAAAwAAAwA8LAUg; \
**subpics-cap=4;**

SDP answer:
m=video 49154 RTP/AVP 98 100 99
mid=100
a=tcap:1 RTP/AVPF
a=pcfg:1 t=1
b=AS:950
b=RS:0
b=RR:5000
/*omni video of room A*/
a=rtpmap:97 H266/90000
a=fmtp:97 profile-id=1; level-id=93; \
**recv-subpics-cap=<independent/dependent>,<number of subpictures>, <max PTL for each decoder>;**

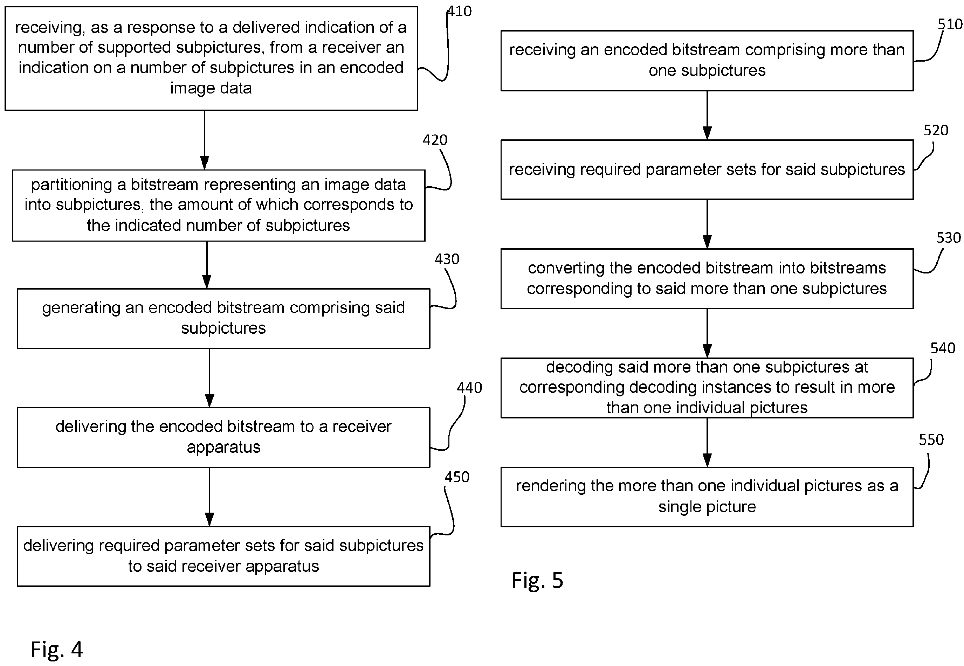

The method according to an embodiment is shown in Figure 4. The method generally comprises receiving 410, as a response to a delivered indication of a number of supported subpictures, from a receiver an indication on a number of subpictures allowed in an encoded image data; partitioning 420 a bitstream representing an image data into subpictures, the amount of which corresponds to the indicated number of subpictures; generating 430 an encoded bitstream comprising said subpictures; delivering 440 the encoded bitstream to a receiver apparatus; and delivering 450 required parameter sets for said subpictures to said receiver apparatus. Each of the steps can be implemented by a respective module of a computer system.

An apparatus according to an embodiment comprises means for receiving, as a response to a delivered indication of a number of supported subpictures, from a receiver an indication on a number of subpictures allowed in an encoded image data; means for partitioning a bitstream representing an image data into subpictures, the amount of which corresponds to the indicated number of subpictures; means for generating an encoded bitstream comprising said subpictures; means for delivering the encoded bitstream to a receiver apparatus; and means for delivering required parameter sets for said subpictures to said receiver apparatus. The means comprises at least one processor, and a memory including a computer program code, wherein the processor may further comprise processor circuitry. The memory and the computer program code are configured to, with the at least one processor, cause the apparatus to perform the method of Figure 4 according to various embodiments.

An example of subpics-cap is presented below to illustrate usage in Offer-Answer exchange:

| Offer | Answer | Result |
|---|---|---|
| subpics-cap=X | recv-subpics-cap=Y (Y<=X) | Y subpictures |
| subpics-cap[:0] | subpics-cap | Parameter sets for independent subpicture decoding not provided by sender |
| subpics-cap: 1 | subpics-cap: 1 | Parameter sets for independent subpicture decoding provided by the sender |
| subpics-cap: 1 | subpics-cap: 0 | Parameter for independent subpicture decoding not required and hence not negotiated by receiver. |

The method according to another embodiment is shown in Figure 5. The method generally comprises receiving 510 an encoded bitstream comprising more than one subpictures; receiving 520 required parameter sets for said subpictures; converting 530 the encoded bitstream into bitstreams corresponding to said more than one subpictures; decoding 540 said more than one subpictures at corresponding decoding instances to result in more than one individual pictures; and rendering 550 the more than one individual pictures as a single picture. Each of the steps can be implemented by a respective module of a computer system.

An apparatus according to another embodiment comprises means for receiving an encoded bitstream comprising more than one subpicture; receiving required parameter sets for said subpictures; converting the encoded bitstream into bitstreams corresponding to said more than one subpicture; decoding said more than one subpicture at corresponding decoding instances to result in more than one individual pictures; and rendering the more than one individual pictures as a single picture. The means comprises at least one processor, and a memory including a computer program code, wherein the processor may further comprise processor circuitry. The memory and the computer program code are configured to, with the at least one processor, cause the apparatus to perform the method of Figure 5 according to various embodiments.

While various embodiments and examples have been described above with reference to the term subpicture, it needs to be understood that embodiments and examples equally apply to any picture partitioning concept similar to subpicture (as defined in WC), such as an isolated region or an MCTS.

While various embodiments and examples have been described above with reference to a negotiation between a sender and a receiver, it needs to be understood that embodiments and examples similarly cover only the operation of a server or a receiver, i.e., one endpoint only, as described in the negotiation.

Some embodiments and examples have been described in relation to syntax and semantics. It needs to be understood that the embodiments and examples apply to any apparatus or computer program code generating a signal according to the syntax and the semantics. It needs to be understood that the embodiments and examples apply to any apparatus or computer program code decoding a signal according to the syntax and the semantics.

The various embodiments describe the subpicture negotiation with session description protocol in the context of SIP/SDP offer-answer session negotiation. However, the same can be implemented as REST API via GET, PUT, POST approaches to know the supporter subpictures, modify the selected value of subpictures or set the value of subpictures. The REST API can also be used to select the in-band or out-of-band signaling of the parameter sets for the independent decoding of a subpicture as an independent bitstream by a decoder instance.

The various embodiments can be implemented with the help of computer program code that resides in a memory and causes the relevant apparatuses to carry out the method. For example, a device may comprise circuitry and electronics for handling, receiving, and transmitting data, computer program code in a memory, and a processor that, when running the computer program code, causes the device to carry out the features of an embodiment. Yet further, a network device like a server may comprise circuitry and electronics for handling, receiving, and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. A sender apparatus comprising:
- means for receiving, as a response to a delivered indication of a number of supported subpictures, an indication on a number of subpictures allowed in an encoded image data;
- means for partitioning a bitstream representing an image data into subpictures, the amount of subpictures corresponds to the indicated number of subpictures allowed;
- means for generating an encoded bitstream comprising said subpictures;
- means for delivering the encoded bitstream to a receiver apparatus; and
- means for delivering required parameter sets for said subpictures to said receiver apparatus.

2. The sender apparatus according to claim 1, further comprising means for indicating a number of deliverable subpictures in an encoded image data.

3. The sender apparatus according to claim 1 or 2, wherein said subpictures comprises independent and/or dependent subpictures.

4. The sender apparatus according to claim 3, further comprising means for indicating whether the required parameter sets are for independent decoding of independent subpictures.

5. The sender apparatus according to any of the claims 1 to 4, further comprising means for turning loop filtering on and/or off across subpicture boundaries.

6. A receiver apparatus comprising
- means for receiving an encoded bitstream comprising one or more subpictures;
- means for receiving required parameter sets for said one or more subpictures;
- means for converting the encoded bitstream into bitstreams corresponding to said one or more subpictures;
- means for decoding said one or more subpictures at corresponding decoding instances to result in one or more individual pictures; and
- means for rendering the one or more individual pictures as a single picture.

7. The receiver apparatus according to claim 6, further comprising means for indicating to a sender apparatus an indication on a number of subpictures in an encoded image data being supported by the decoding instances.

8. The receiver apparatus according to claim 6 or 7, further comprising means for indicating whether the supported number of subpictures are independent subpictures or dependent subpictures.

9. The receiver apparatus according to any of claims 7 to 8, further comprising means for indicating highest profile, level and tier which is supported by each of the decoder instances.

10. The receiver apparatus according to any of the claims 6 to 9, further comprising means for receiving a session parameter set for the one or more subpictures and a combined video sequence in a session negotiation.

11. A method, comprising:
- receiving, as a response to a delivered indication of a number of supported subpictures, from a receiver an indication on a number of subpictures allowed in an encoded image data;
- partitioning a bitstream representing an image data into subpictures, the amount of subpicutres corresponds to the indicated number of subpictures allowed;
- generating an encoded bitstream comprising said subpictures;
- delivering the encoded bitstream to a receiver apparatus; and
- delivering required parameter sets for said subpictures to said receiver apparatus.

12. The method according to claim 11, further comprising indicating a number of deliverable subpictures in an encoded image data.

13. The method according to claim 11 or 12, wherein said subpictures comprising independent and/or dependent subpictures.

14. The method according to claim 13, further comprising indicating whether the required parameter sets are for independent decoding of independent subpictures.

15. A method comprising
- receiving an encoded bitstream comprising one or more subpictures;
- receiving required parameter sets for said one or more;
- converting the encoded bitstream into bitstreams corresponding to said one or more subpictures;
- decoding said one or more subpictures at corresponding decoding instances to result in one or more individual pictures; and
- rendering the one or more individual pictures as a single picture.
